# FASCICULE DE BREVET EUROPEEN

(11) **EP 1 168 685 B1**
(45) Date de publication et mention de la délivrance du brevet: **15.11.2006**
(21) Numéro de dépôt: 01401724.8
(22) Date de dépôt: 28.06.2001
(51) Int. Cl.: H04B 10/18

(54) **Compensation de dispersion chromatique dans un système de transmission optique large bande**
Farbzerstreungskompensation in einem optischen Breitband-Übertragungssystem
Chromatic dispersion compensation in a wideband optical transmission system

(30) Priorité: 30.06.2000 FR 0008554
(43) Date de publication de la demande: 02.01.2002
(73) Titulaire: ALCATEL, 75008 Paris (FR)
(72) Inventeur: Sillard, Pierre, 78150 Le Chesnay (FR); de Montmorillon, Louis-Anne, 75017 Paris (FR); Fleury, Ludovic, 78390 Bois d'Arcy (FR); Nouchi, Pascale, 78600 Maisons Laffitte (FR); Riant, Isabelle, 91400 Orsay (FR); Hamaide, Jean-Pierre, 91180 St Germain Les Arpajon (FR)
(74) Mandataire: Lamoureux, Bernard

(56) Documents cités:
- EP-A- 0 989 438
- KASHYAP R ET AL: "EIGHT WAVELENGT X 10GB/S SIMULTANEOUS DISPERSION COMPENSATION OVER 100KM SINGLE-MODE FIBRE USING A SINGLE 10 NANOMETER BANDWIDTH, 1.3 METRE LONG, SUPER-STEP-CHIRPED FIBRE BRAGG GRATING WITH A CONTINUOUS DELAY OF 13.5 NANOSECONDS" PROCEEDINGS OF THE EUROPEAN CONFERENCE ON OPTICAL COMMUNICATION, 1996, XP000921171

## Description

La présente invention concerne le domaine des transmissions par fibre optique, et plus spécifiquement, la compensation de la dispersion chromatique et de la pente de dispersion chromatique dans des systèmes de transmission par fibre optique.

Dans les nouveaux réseaux de transmission à hauts débits et multiplexés en longueur d'onde, il est avantageux de gérer la dispersion chromatique, notamment pour des débits supérieurs ou égaux à 10 Gbit/s; l'objectif est d'obtenir, pour toutes les valeurs de longueur d'onde du multiplex, une dispersion chromatique cumulée sensiblement nulle sur la liaison, de sorte à limiter l'élargissement des impulsions. Une valeur cumulée de quelques dizaines de ps/nm pour la dispersion est acceptable. A cet effet, on cherche à limiter la dispersion chromatique, et pour pouvoir agir sur plusieurs canaux, la pente de dispersion chromatique. Il est aussi intéressant d'éviter au voisinage des longueurs d'onde utilisées dans le système les valeurs nulles de la dispersion chromatique, pour lesquelles les effets non-linéaires sont plus importants. Ce problème de compensation de la dispersion chromatique et de la pente de la dispersion chromatique est particulièrement aigu pour les systèmes de transmission à très haut débit - typiquement pour les systèmes de transmission à multiplexage en longueur d'onde avec un débit par canal de 40 Gbit/s et au-delà. Le problème est d'autant plus aigu que la largeur de bande augmente et atteint des valeurs supérieures ou égales à 25 nm.

On utilise classiquement comme fibre de ligne pour les systèmes de transmissions à fibres optiques des fibres à saut d'indice comme fibre de ligne (fibres SMF ou "single mode fibers"). La demanderesse commercialise ainsi sous la référence ASMF 200 une fibre monomode à saut d'indice présentant une longueur d'onde λ₀ d'annulation de la dispersion chromatique entre 1300 et 1320 nm, et une dispersion chromatique inférieure à 3,5 ps/(nm.km) dans une plage de 1285-1330 nm, et de 17 ps/nm.km à 1550 nm. La pente de dispersion chromatique à 1550 nm est de l'ordre de 0,06 ps/nm².km.

Sont aussi apparues sur le marché des fibres à dispersion décalée, ou DSF (acronyme de l'anglais "Dispersion shifted fibers"). Ces fibres sont telles qu'à la longueur d'onde de transmission à laquelle elles sont utilisées, qui est en général différente de la longueur d'onde de 1,3 µm pour laquelle la dispersion de la silice est sensiblement nulle, la dispersion chromatique du mode guidé est sensiblement nulle; c'est-à-dire que la dispersion chromatique de la silice, non nulle, est compensée - d'où l'emploi du terme décalé - par une augmentation de l'écart d'indice Δn entre le coeur de la fibre et la gaine optique. Cet écart d'indice permet de décaler la longueur d'onde pour laquelle la dispersion chromatique est nulle; il est obtenu par l'introduction de dopants dans la préforme, lors de la fabrication de celle-ci, par exemple par un processus de MCVD connu en soi, et qui n'est pas décrit plus en détail ici.

On qualifie de NZ-DSF (acronyme de l'anglais "non-zero dispersion shifted fibers") des fibres à dispersion décalée, présentant une dispersion chromatique non-nulle pour les longueurs d'onde auxquelles elles sont utilisées. Ces fibres présentent pour ces longueurs d'onde une dispersion chromatique faible, typiquement comprise entre 2 et 14 ps/(nm.km) (NZ-DSF+) ou entre -6 et -2 ps/(nm.km) (NZ-DSF-) à 1550 nm. Les différentes fibres NZ-DSF existantes présentent une gamme de pentes très variables comprises entre 0,04 et 0,12ps/nm²/km. A titre d'exemple, la société Corning commercialise sous la marque LEAF une fibre présentant, à 1550nm, une dispersion chromatique de l'ordre de 4 ps/(nm.km) et une pente de dispersion chromatique de l'ordre de 0,08 à 0,09ps/(nm².km). La société Lucent commercialise sous la marque TrueWave une fibre présentant, à 1550nm, une dispersion chromatique de l'ordre de 4ps/(nm.km) et une pente de dispersion chromatique de 0,045ps/(nm².km). La demanderesse commercialise sous la marque TeraLight une fibre présentant, à cette même valeur de 1550nm, une dispersion chromatique de 8 ps/(nm.km) et une pente de dispersion chromatique de 0,058 ps/(nm².km).

Pour compenser la dispersion chromatique et la pente de dispersion chromatique dans des fibres SMF ou NZ-DSF utilisées comme fibres de ligne, il est connu d'utiliser des faibles longueurs de fibre de compensation de dispersion ou DCF (Dispersion Compensating Fiber en langue anglaise). Un exemple dans le cas d'une fibre de ligne à saut d'indice ou fibre SMF (acronyme de l'anglais "single mode fiber") est donné dans L. Grüner-Nielsen et autres, Large volume Manufacturing of dispersion compensating fibers, OFC'98 Technical Digest TuD5.

Cette solution est plus difficile à mettre en oeuvre pour des fibres de ligne NZ-DSF, qui présentent une dispersion chromatique plus faible que la fibre de ligne SMF. De fait, pour de telles fibres, le rapport entre la dispersion chromatique et la pente de dispersion chromatique est plus faible que pour la fibre SMF, et la réalisation d'une fibre de compensation de dispersion est plus ardue ; en fait, les tolérances de fabrications seront beaucoup plus strictes : la fibre sera donc plus délicate à réaliser; il devient en particulier plus difficile de trouver un compromis acceptable entre les différentes caractéristiques de propagation - surface effective, longueur d'onde de coupure, pertes par courbures. Il a encore été proposé dans K. Mukasa et autres, Novel network fiber to manage dispersion at 1.55 µm with combination of 1.3 m zero dispersion single mode fiber, ECOC 97, 22-25 September 1997, Conference publication No 448, une fibre appelée RDF (ou "Reverse Dispersion Fiber"), qui présente des propriétés de dispersion chromatique et de pente de dispersion chromatique inverses de celles d'une fibre de ligne SMF. Cette fibre présente à 1550 nm une dispersion chromatique de - 15,6 ps/(nm.km), et une pente de dispersion chromatique de - 0,046 ps/(nm².km). Dans cette publication la fibre RDF est utilisée comme fibre de ligne, en alternance avec la fibre SMF: la dispersion chromatique et la pente de dispersion chromatique cumulées dans une section de fibre SMF sont compensées par la propagation dans la section suivante de fibre RDF.

De même que pour les solutions DCF précédemment décrites, les solutions RDF sont plus difficiles à mettre en oeuvre lorsqu'il s'agit de compenser la dispersion et la pente d'une fibre NZDSF.

Dans la suite de ce document nous appellerons fibre de compensation de dispersion une fibre utilisée dans le câble ou à l'intérieur d'un module pour compenser la dispersion chromatique d'une fibre de ligne SMF ou d'une fibre NZDSF; c'est-à-dire que nous confondrons dans ce terme générique de "fibre de compensation de dispersion" les concepts de fibre DCF et RDF décrits dans les articles ci-dessus.

Il est par ailleurs connu d'utiliser pour la compensation de la dispersion chromatique et de la pente de dispersion chromatique un réseau de Bragg (R. I. Laming et al., « Dispersion compensating fibre Bragg gratings », Proceeding WFOPC'98, University of Pavia, pages 108 à 115). Dans ce cas, une variation quadratique du pas permet de compenser la pente de la dispersion spectrale (M. Ibsen et al., « Long continuously chirped fibre Bragg gratings for compensation of linear- and 3^{rd} order-dispersion, ECOC97, Septembre 1997, pages 49 à 52). L'inconvénient de ce type de solution est que la largeur spectrale couverte est proportionnelle au rapport de la longueur du réseau photo-inscrit à la dispersion chromatique du composant, exprimée en ps/nm. Ainsi, un réseau d'un mètre de longueur inscrit de manière à compenser la dispersion chromatique et la pente après 100 km de propagation d'un signal émettant dans la bande C (typiquement entre 1530 et 1565 nm) dans une fibre LEAF (marque) du type mentionné ci-dessus ne pourra pas avoir une bande passante supérieure à 25nm. On trouve une bande passante maximale de 13 nm pour compenser la dispersion chromatique et la pente de la fibre TeraLight (marque) de la demanderesse. Ces largeurs spectrales sont de loin inférieures aux largeurs des bandes S (typiquement entre 1460 et 1490 nm), C ou L (typiquement entre 1570 et 1610 nm); ces largeurs sont voisines de 35 nm.

La Research Disclosure no 41909, Hybrid Dispersion Compensating Module, (publiée par Kenneth Mason Publications Ltd. Dans le numéro 419 en Mars 1999) concerne le problème de la compensation de dispersion, dans des systèmes de transmission par fibre optique à fibre de ligne à dispersion positive; ce document déconseille l'utilisation de fibre de compensation de dispersion, du fait des pertes importantes et du coût des fibres. Ce document conseille donc d'utiliser des réseaux de Bragg pour compenser la dispersion. Le problème soulevé est alors que les réseaux de Bragg sont conçus pour une valeur fixe de dispersion chromatique, et ne peuvent pas être adaptés facilement sur le terrain en fonction des variations locales de la dispersion chromatique. Ce document propose donc d'utiliser un module, formé d'un circulateur, d'une section de fibre de compensation de dispersion et d'un réseau de Bragg fonctionnant en réflexion. La lumière traverse le circulateur, la fibre de compensation de dispersion, est réfléchie par le réseau de Bragg, traverse de nouveau la fibre de compensation de dispersion puis le circulateur. Le réseau de Bragg compense la majorité de la dispersion chromatique, ce qui permet de conserver les avantages du réseau de Bragg, notamment une faible perte d'insertion. La présence d'une section de fibre de compensation de dispersion permet d'adapter facilement le module de compensation de dispersion et pallie la fixité des caractéristiques du réseau de Bragg. Ce document n'apporte pas de solution au problème de largeur de bande; la fibre de compensation de dispersion n'est utilisée en fait que pour l'adaptation du réseau de Bragg.

La demande de brevet japonais mise à l'inspection publique sous le numéro JP-A-11 119030 propose aussi de compenser la dispersion chromatique dans un système de transmission, à l'aide d'une combinaison d'une fibre de compensation et d'un réseau inscrit. Le réseau inscrit peut notamment être un réseau de Bragg en transmission ou en réflexion, ou un réseau de Bragg incliné en transmission. La fibre de compensation de dispersion est utilisée pour compenser la dispersion chromatique de la fibre de ligne; le réseau inscrit est utilisé pour compenser l'atténuation dépendante en longueur d'onde de la fibre de compensation de dispersion et non la dispersion chromatique ou la pente de la dispersion chromatique provoquée par la fibre de compensation de dispersion. Le type de fibre de ligne utilisée n'est pas précisé.

Le rapport de R. Kashyap et al. avec le titre "Eight wavelength × 10Gb/s simultaneous dispersion Compensation over 100 km single-mode-fibre using a single 10 Nanometer bandwidth, 1.3m long, super-step-chirped fibre Bragg grating with a continuous delay of 13.5 ns" divulgue un compensateur de dispersion comprenant une pluralité de résaux de Bragg ayant chacun une bande passante de 0.75nm arec un début et fin de longueur l'onde séquentiel.

L'invention propose une solution au problème de la compensation de la dispersion chromatique et de la pente de dispersion chromatique dans les systèmes de transmission large bande. Par rapport à la Research Disclosure mentionnée plus haut, elle propose une solution dans laquelle le réseau de Bragg reste facile à produire, et ce malgré la largeur de bande du système. Elle propose une solution adaptée à des transmissions à haut débit, sur des largeurs de bande importantes.

Plus précisément, l'invention propose un système de transmission par fibre optique, comprenant une section de fibre de transmission (4ₗ, 4ₙ, 9ₗ, 9ₙ), compensée en dispersion chromatique par une section de fibre de compensation de dispersion (12, 10ₗ, 10ₙ) et par une pluralité de réseaux de Bragg (15, 16, 17, 20, 22, 24) ayant chacun une bande passante d'une largeur supérieure ou égale à 25 nm, et compensant la dispersion chromatique dans des bandes distinctes de longueurs d'onde. Lesdits réseaux de Bragg peuvent être montés en parallèle et/ou en série.

Dans un mode de réalisation, chaque réseau de Bragg présente une bande passante supérieure ou égale à 30 nm, de préférence 35 nm.

De préférence, la dispersion chromatique cumulée dans chaque réseau de Bragg est inférieure ou égale en valeur absolue à 250 ps/nm.

Il est encore avantageux que chaque réseau de Bragg compense, pour la longueur d'onde centrale de sa plage d'utilisation, moins des deux tiers de la dispersion chromatique de la fibre de transmission, et de préférence, moins d'un tiers de la dispersion chromatique de la fibre de transmission.

Dans un mode de réalisation, chaque réseau de Bragg compense, pour la longueur d'onde centrale de sa plage d'utilisation, au moins la moitié de la pente de dispersion chromatique de la fibre de transmission.

Dans un autre mode de réalisation, chaque réseau de Bragg présente, pour la longueur d'onde centrale de sa plage d'utilisation, un rapport entre la dispersion chromatique et la pente de dispersion chromatique supérieur en valeur absolue à 15 nm, de préférence à 20 nm.

Avantageusement, la fibre de compensation de dispersion présente une dispersion chromatique de signe opposé à la fibre de transmission pour une longueur d'onde d'utilisation et de préférence supérieure ou égale en valeur absolue à la dispersion de la fibre de transmission.

Dans un mode de réalisation, la bande d'utilisation du système s'étend au-dessus de 1250 et en dessous de 1650nm ; elle peut comprendre la bande S entre 1460 et 1490 nm, la bande C entre 1530 et 1565 nm et/ou la bande L entre 1570 et 1610 nm, associées chacune à un réseau de Bragg.

Il est avantageux que la dispersion chromatique cumulée pour chaque canal faisant partie de la bande de longueur d'onde d'utilisation soit inférieure à 100ps/nm et de préférence à 50ps/nm, voire à 10ps/nm, en moyenne sur 100km de transmission.

L'invention propose encore un module de compensation de dispersion chromatique pour un système de transmission par fibre optique, comprenant une section de fibre de compensation de dispersion (12) et une pluralité de réseaux de Bragg (15, 16, 17) présentant chacun une bande passante d'une largeur supérieure ou égale à 25 nm, et compensant la dispersion chromatique dans des bandes distinctes de longueurs d'onde. Lesdits réseaux de Bragg peuvent être montés en série ou en parallèle.

De préférence, la dispersion chromatique cumulée dans chaque réseau de Bragg est inférieure ou égale en valeur absolue à 250 ps/nm.

Il est aussi avantageux que chaque réseau de Bragg présente une bande passante supérieure ou égale à 30 nm, de préférence 35 nm.

Dans un mode de réalisation, pour une longueur d'onde d'utilisation, la dispersion chromatique cumulée dans chaque réseau de Bragg est inférieure ou égale à deux fois la dispersion chromatique cumulée dans la fibre de compensation de dispersion, et de préférence, inférieure à la moitié de celle-ci.

Dans un autre mode de réalisation, pour la longueur centrale de la plage d'utilisation de chaque réseau de Bragg, la pente de dispersion chromatique cumulée dans le réseau de Bragg est négative et inférieure ou égale à la pente de dispersion chromatique cumulée dans la fibre de compensation de dispersion.

Il est encore avantageux que chaque réseau de Bragg présente, pour la longueur d'onde centrale de sa plage d'utilisation, un rapport entre la dispersion chromatique et la pente supérieur à 15, de préférence supérieur à 20 nm.

De préférence, la bande d'utilisation s'étend au-dessus de 1250 et en dessous de 1650nm ; elle peut comprendre la bande S entre 1460 et 1490 nm, la bande C entre 1530 et 1565 nm et la bande L entre 1570 et 1610 nm, associées chacune à un réseau de Bragg.

L'invention propose enfin un module de compensation de dispersion chromatique pour un système de transmission par fibre optique, comprenant une pluralité de réseaux de Bragg présentant chacun une bande passante d'une largeur supérieure ou égale à 25 nm, et compensant la dispersion chromatique dans des bandes distinctes de longueurs d'onde.

Le module peut présenter une pluralité de réseaux de Bragg montés en série et/ou une pluralité de réseaux de Bragg montés en parallèle.

Dans tous les cas, l'utilisation des réseaux de Bragg permet de limiter les effets de la contrainte sur le rapport entre la dispersion chromatique et la pente de dispersion chromatique : il est ainsi possible d'utiliser de la fibre de compensation de dispersion présentant des caractéristiques de propagation acceptables du point de vue système. Par ailleurs, l'utilisation de fibre de compensation de dispersion permet de limiter la dispersion chromatique qui doit être compensée par les réseaux de Bragg, de sorte à surmonter la contrainte sur la largeur de bande.

D'autres caractéristiques et avantages de l'invention apparaîtront à la lecture de la description qui suit de modes de réalisation de l'invention, donnés à titre d'exemple et en référence aux dessins annexés, qui montrent :
- figure 1, une représentation schématique d'un système de transmission selon l'invention;
- figure 2, une représentation schématique d'un autre mode de réalisation d'un système de transmission selon l'invention;
- figures 3 à 5, des modes de réalisation de modules de compensation de dispersion selon l'invention.

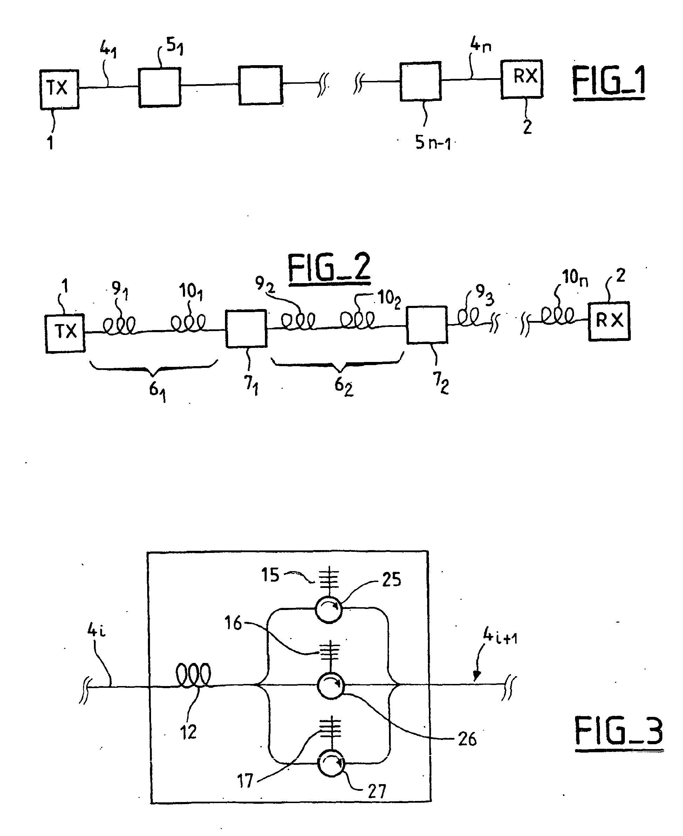

Dans le mode de réalisation de la figure 1, on utilise comme fibre de ligne de la fibre dite de transmission, i. e. de la fibre SMF, NZ-DSF ou autre, et la compensation s'effectue dans un module de compensation, i. e. dans une boîte de petite dimension. Dans le mode de réalisation de la figure 2, au contraire, une partie de la compensation de la dispersion s'effectue sur le câble; on qualifie alors de "fibre de ligne" la fibre de transmission (de la fibre SMF, NZ-DSDF ou autre) et la fibre de compensation de dispersion.

On a représenté sur la figure 1 un émetteur TX 1 et un récepteur RX 2. Ces deux éléments sont reliés par une pluralité de tronçons de fibre de ligne 4ₗ à 4ₙ. On entend ici par fibre de ligne la fibre s'étendant le long du système de transmission, et dont la longueur correspond sensiblement à la longueur du système. Dans l'exemple de la figure 1, cette fibre de ligne est constituée de fibre de transmission du type NZ-DSF ou autre. Entre les tronçons sont disposés des modules de compensation de dispersion 5ₗ à 5ₙ₋₁. Ne sont pas portés à la figure les filtres, amplificateurs et autres éléments sans incidence directe sur le fonctionnement de l'invention. Le module de compensation de dispersion 5ₗ est représenté en détail à la figure 3. Dans ce mode de réalisation, l'ensemble de la compensation de la dispersion chromatique et de la pente de dispersion chromatique s'effectue dans les modules.

La figure 2 montre une représentation schématique d'un autre mode de réalisation d'un système de transmission selon l'invention. Dans l'exemple de la figure 2, la fibre de compensation de dispersion est aussi utilisée comme fibre de ligne. Le système de transmission comprend comme dans le cas de la figure 1 un émetteur TX 1 et un récepteur RX 2. Ces deux éléments sont reliés par une pluralité de tronçons de fibre 6ₗ à 6ₙ, entre lesquels sont disposés des modules de compensation de dispersion 7ₗ à 7ₙ₋₁. Entre deux modules de compensation de dispersion, chaque tronçon 6ᵢ présente une section de fibre de transmission 9ᵢ NZ-DSF ou autre, et une section de fibre de compensation de dispersion 10ᵢ. En d'autres termes, par rapport au mode de réalisation de la figure 1, la fibre de ligne est constituée de sections de fibres différentes, qui présentent des dispersions chromatiques opposées.

Dans les exemples de ces deux figures, il est aussi avantageux de prévoir dans le récepteur RX une partie agissant comme module de compensation. Plus généralement, on peut dans l'émetteur et dans le récepteur mettre en oeuvre une précompensation ou une postcompensation.

La figure 3 montre un mode de réalisation de module de compensation de dispersion, adapté à un système de transmission du type de celui de la figure 1 dans lequel la compensation de la dispersion s'effectue uniquement dans les modules de compensation 5 ₙ₋₁. Le signal traverse la fibre de compensation de dispersion 12, puis est démultiplexé; dans l'exemple, on démultiplexe suivant les trois bandes S, C et L, étant entendu que l'on pourrait aussi utiliser d'autres bandes ou un nombre de bandes plus restreint. Chaque partie du signal démultiplexé traverse ensuite une branche; chaque branche présente un circulateur à trois ports et un réseau de Bragg utilisé en réflexion : un port du circulateur est relié à la sortie de la fibre de compensation de dispersion, un port du circulateur est relié au réseau de Bragg et le troisième port du circulateur constitue la sortie du module de compensation de dispersion. La figure montre donc dans chaque branche un circulateur 25, 26, 27, avec un réseau de Bragg en réflexion 15, 16, 17. Après réflexion dans le réseau de Bragg correspondant et passage dans le circulateur, les signaux des trois bandes sont remultiplexés ou combinés. Autrement dit, les réseaux de Bragg compensant la dispersion dans des bandes différentes sont montés en parallèle. On voit dans ce cas, la souplesse apportée par l'association de la DCF et du réseau de Bragg.

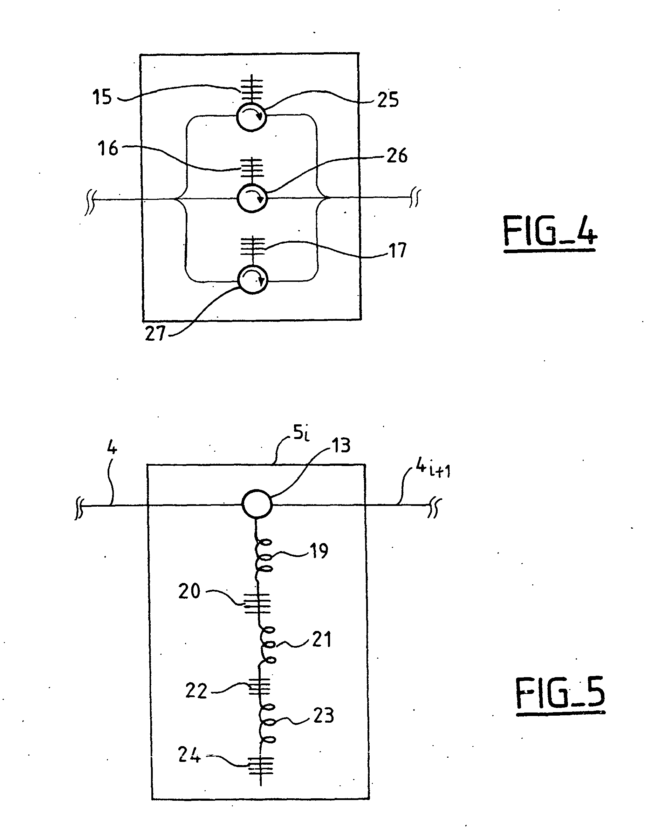

La figure 4 montre une représentation schématique d'un module de compensation de dispersion pour le système de transmission de la figure 2. Le module est similaire au module de la figure 3, à ceci près qu'il ne comprend pas de fibre de compensation de dispersion. Le module présente donc uniquement les trois branches avec les circulateurs 25, 26, 27et les réseaux de Bragg 15, 16 et 17.

La figure 5 montre encore un mode de réalisation de module, pour un système de transmission du type de celui de la figure 1. On utilise une succession de fibres de compensation de dispersion et de réseaux de Bragg pour différentes bandes. Autrement dit, dans le mode de réalisation de la figure 5, des réseaux de Bragg compensant la dispersion dans des bandes différentes sont montés en série. L'exemple correspond aux trois bandes S, C et L, mais on peut encore une fois prévoir d'autres bandes. Le module présente donc un circulateur 13 à trois ports. Un port du circulateur est relié à l'entrée du module, un port du circulateur est relié à la succession de fibres de compensation de dispersion et de réseaux de Bragg et le troisième port du circulateur constitue la sortie du module de compensation de dispersion. Plus spécifiquement, la succession de fibres et de réseaux de Bragg comprend une première fibre de compensation de dispersion 19, un premier réseau de Bragg 20, une deuxième fibre de compensation de dispersion 21 un deuxième réseau de Bragg 22, une troisième fibre de compensation de dispersion 23 et un troisième réseau de Bragg 24. La lumière entrant dans le module traverse le circulateur, est transmise vers le réseau de Bragg. La lumière de la première bande traverse la première fibre de compensation de dispersion 19 et est réfléchie par le premier réseau de Bragg 20. Elle traverse à nouveau la première fibre de compensation 19 et le circulateur pour sortir du module de compensation de dispersion. La lumière de la deuxième bande traverse la première fibre de compensation de dispersion 19, le premier réseau de Bragg 20, la deuxième fibre de compensation de dispersion 21 et est réfléchie par le deuxième réseau de Bragg 22. Elle traverse à nouveau les mêmes composants puis le circulateur pour sortir du module de compensation de dispersion. Enfin, La lumière de la troisième bande traverse la première fibre de compensation de dispersion 19, le premier réseau de Bragg 20, la deuxième fibre de compensation de dispersion 21, le deuxième réseau de Bragg 22, la troisième fibre de compensation de dispersion 23 et est réfléchie par le troisième réseau de Bragg 24. Elle traverse à nouveau les mêmes composants puis le circulateur pour sortir du module de compensation de dispersion. Ainsi, les réseaux de Bragg utilisés en réflexion et adaptés en longueur d'onde permettent un traitement différencié des lumières des différentes bandes. A noter ici aussi que les réseaux de Bragg peuvent être inscrits dans une seule et même fibre de compensation de dispersion, si sa biréfringence le permet, ce qui évitera les pertes engendrées par les soudures.

Les modes de réalisation des figures 3, 4 et 5 peuvent être combinés, en répartissant la fibre de compensation de dispersion entre la fibre de ligne et les modules ou en utilisant une combinaison plus complexe des réseaux de Bragg mélangeant leur utilisation en parallèle et en série; en fait, ils ne représentent que les extrêmes sur la plage de solutions possibles.

On donne maintenant des exemples de mise en oeuvre de l'invention.

### Exemple 1

La compensation de la dispersion et de la pente est faite pour les trois bandes de longueur d'onde S, C et L en utilisant le principe des figures 3 ou 4. Les valeurs numériques sont les suivantes :
- fibre de transmission nécessitant d'être compensée :
   - section de 100 km de fibre NZ-DSF+ présentant respectivement à 1475, 1550 et 1590 nm une dispersion chromatique de 3,6 , 8 et 10,3 ps/(nm.km) et une pente de dispersion chromatique de 0,061 , 0,058 et 0,057 ps/(nm².km);
   - dispersion chromatique cumulée aux trois longueurs d'ondes sur la section de fibre NZ-DSF+ : 360 , 800 et 1030 ps/nm; pente de dispersion chromatique cumulée sur la section de fibre NZ-DSF+ : 6,1 , 5,8 et 5,7 ps/nm²;
- fibre de compensation de dispersion :
   - longueur : 7.2 km ;
   - dispersion chromatique aux trois longueurs d'onde : -78,4 , -100 et -113,5 ps/(nm.km) localement soit -564,5, -720, -817,2 ps/nm cumulée;
   - pente de dispersion chromatique: -0,239, -0,330 et -0,335 ps/(nm².km) localement soit -1,7 -2,4 et -2,4 ps/nm² cumulée;
- réseau de Bragg 15 vu par les canaux de la bande S:
   - bande passante : 35nm ; longueur de l'ordre de 1m ;
   - dispersion chromatique à 1475nm : +204,5 ps/nm ;
   - pente de dispersion chromatique : -4,4 ps/nm²;
   - rapport entre la dispersion chromatique et la pente de dispersion chromatique à 1475 nm pour le réseau de Bragg : -46 nm.
- réseau de Bragg 16 vu par les canaux de la bande C:
   - bande passante : 35nm ; longueur de l'ordre de 0,5 m ;
   - dispersion chromatique à 1550nm : -80 ps/nm ;
   - pente de dispersion chromatique: -3,4 ps/nm²;
   - rapport entre la dispersion chromatique et la pente de dispersion chromatique à 1550 nm pour le réseau de Bragg : 24 nm.
- réseau de Bragg 17 vu par les canaux de la bande L:
   - bande passante : 35nm ; longueur de l'ordre de 1 m ;
   - dispersion chromatique à 1590nm : -213 ps/nm ;
   - pente de dispersion chromatique: -3,3 ps/nm²;
   - rapport entre la dispersion chromatique et la pente de dispersion chromatique à 1590 nm pour le réseau de Bragg : 65 nm.

Les sommes de la dispersion chromatique et de la pente de dispersion chromatique à 1475nm, 1550 nm et 1590nm cumulées dans la section de fibre de transmission, dans la fibre de compensation de dispersion et dans les réseaux de Bragg respectifs sont nulles. On peut pour cet exemple utiliser les montages des figures 3 et 4.

### Exemple 2

Dans cet exemple, on utilise les mêmes fibres de compensation de dispersion et de transmission que celle proposées dans l'exemple précédent. Ici, la compensation de la dispersion et de la pente est faite pour les trois bandes de longueur d'onde S, C et L en utilisant le principe de la figure 5. Les valeurs numériques sont les suivantes :
- fibre de transmission nécessitant d'être compensée :
   - section de 100 km de fibre NZ-DSF+ présentant respectivement à 1475, 1550 et 1590 nm une dispersion chromatique de 3,6 , 8 et 10,3 ps/(nm.km) et une pente de dispersion chromatique de 0,061 , 0,058 et 0,057 ps/(nm².km);
   - dispersion chromatique cumulée aux trois longueurs d'ondes sur la section de fibre NZ-DSF+ : 360 , 800 et 1030 ps/nm; pente de dispersion chromatique cumulée sur la section de fibre NZ-DSF+ : 6,1 , 5,8 et 5,7 ps/nm²;
- fibre de compensation de dispersion :
   - longueur : 1,1 km de fibre 19 jusqu'au réseau réfléchissant les canaux de la bande S puis 1,9 km supplémentaires de fibre 21 jusqu'au réseau réfléchissant les canaux de la bande C et enfin 0,7 km supplémentaires de fibre 23 jusqu'au réseau réfléchissant les canaux de la bande L ;
   - dispersion chromatique aux trois longueurs d'onde : -78,4 , -100 et-113,5 ps/(nm.km) localement soit -172,5 -600 et -840 ps/nm cumulée (en prenant en compte les allers-retours et une longueur différente vue par chacun des canaux);
   - pente de dispersion chromatique: -0,239, -0,330 et -0,335 ps/(nm².km) localement soit -0,5 , -2,0 et -2,5 ps/nm² cumulée (en prenant en compte les allers-retours et une longueur différente vue par chacun des canaux);
- réseau de Bragg 20 réfléchissant les canaux de la bande S:
   - bande passante : 35nm ; longueur de l'ordre de 1m ;
   - dispersion chromatique à 1475nm : -187,5 ps/nm ;
   - pente de dispersion chromatique : -5,6 ps/nm²;
   - rapport entre la dispersion chromatique et la pente de dispersion chromatique à 1475 nm pour le réseau de Bragg : 33 nm.
- réseau de Bragg 22 réfléchissant les canaux de la bande C:
   - bande passante : 35nm ; longueur de l'ordre de 1 m ;
   - dispersion chromatique à 1550nm : -200 ps/nm ;
   - pente de dispersion chromatique: -3,8 ps/nm²;
   - rapport entre la dispersion chromatique et la pente de dispersion chromatique à 1550 nm pour le réseau de Bragg : 53 nm.
- réseau de Bragg 24 réfléchissant les canaux de la bande L:
   - bande passante : 35nm ; longueur de l'ordre de 1m ;
   - dispersion chromatique à 1590nm : -190 ps/nm ;
   - pente de dispersion chromatique: -3,2 ps/nm²;
   - rapport entre la dispersion chromatique et la pente de dispersion chromatique à 1590 nm pour le réseau de Bragg : 59 nm.

Comme précédemment, les sommes de la dispersion chromatique et de la pente de dispersion chromatique à 1475nm, 1550 nm et 1590nm cumulées dans la section de fibre de transmission, dans la fibre de compensation de dispersion et dans les réseaux de Bragg respectifs sont nulles.

### Exemple 3

Dans cet exemple, on utilise le même schéma que dans l'exemple 1. La fibre de transmission que l'on utilise dans ce cas est une fibre SMF. Les valeurs numériques sont les suivantes :
- fibre de transmission nécessitant d'être compensée :
   - section de 100 km de fibre SMF présentant respectivement à 1475, 1550 et 1590 nm une dispersion chromatique de 12,4 , 17 et 19,3 ps/(nm.km) et une pente de dispersion chromatique de 0,064 , 0,058 et 0,056 ps/(nm².km);
   - dispersion chromatique cumulée aux trois longueurs d'ondes sur la section de fibre SMF : 1240 , 1700 et 1920 ps/nm; pente de dispersion chromatique cumulée sur la section de fibre SMF : 6,4 , 5,8 et 5,6 ps/nm²;
- fibre de compensation de dispersion :
   - longueur : 15 km ;
   - dispersion chromatique aux trois longueurs d'onde : -78,4, -100 et -113,5 ps/(nm.km) localement soit -1176 , -1500, -1702,5 ps/nm cumulée;
   - pente de dispersion chromatique: -0,239, -0,330 et-0,335 ps/(nm².km) localement soit -3,6 , -5,0 et -5,0 ps/nm² cumulée;
- réseau de Bragg 15 vu par les canaux de la bande S:
   - bande passante : 35nm ; longueur de l'ordre de 1 m ;
   - dispersion chromatique à 1475nm : -64 ps/nm ;
   - pente de dispersion chromatique : -2.8 ps/nm²;
   - rapport entre la dispersion chromatique et la pente de dispersion chromatique à 1475 nm pour le réseau de Bragg : 23 nm.
- réseau de Bragg 16 vu par les canaux de la bande C:
   - bande passante : 35nm ; longueur de l'ordre de 0,5 m ;
   - dispersion chromatique à 1550nm : -200 ps/nm ;
   - pente de dispersion chromatique: -0.8 ps/nm²;
   - rapport entre la dispersion chromatique et la pente de dispersion chromatique à 1550 nm pour le réseau de Bragg : 250 nm.
- réseau de Bragg 17 vu par les canaux de la bande L:
   - bande passante : 35nm ; longueur de l'ordre de 1 m ;
   - dispersion chromatique à 1590nm : -217,5ps/nm ;
   - pente de dispersion chromatique: -0,6 ps/nm²;
   - rapport entre la dispersion chromatique et la pente de dispersion chromatique à 1590 nm pour le réseau de Bragg : 363 nm.

   Les sommes de la dispersion chromatique et de la pente de dispersion chromatique à 1475nm, 1550 nm et 1590nm cumulées dans la section de fibre de transmission, dans la fibre de compensation de dispersion et dans les réseaux de Bragg respectifs sont nulles. On peut pour cet exemple utiliser les montages des figures 3 et 4.

Bien entendu, la présente invention n'est pas limitée aux exemples et modes de réalisation décrits et représentés, mais elle est susceptible de nombreuses variantes accessibles à l'homme de l'art. D'autres configurations du module ou du système que celles présentées aux figures 1 à 5 sont possibles. On peut notamment envisager l'utilisation d'autres types de réseaux de Bragg tels que les réseaux de Bragg en réflexion présentant des variations de pas plus complexes qu'une variation quadratique, les réseaux de Bragg à couplage de mode ou des réseaux de Bragg montés en transmission.

## Revendications

1. Un système de transmission par fibre optique, comprenant une section de fibre de transmission (4ₗ, 4ₙ, 9ₗ, 9ₙ), compensée en dispersion chromatique par une section de fibre de compensation de dispersion (12, 10ₗ, 10ₙ) et par une pluralité de réseaux de Bragg (15, 16, 17, 20, 22, 24) ayant chacun une bande passante d'une largeur supérieure ou égale à 25 nm, et compensant la dispersion chromatique dans des bandes distinctes de longueurs d'onde.

2. Le système de la revendication 1, **caractérisé en ce que** lesdits réseaux de Bragg (20, 22, 24) sont montés en série.

3. Le système de la revendication 1, **caractérisé en ce que** lesdits réseaux de Bragg (15, 16, 17) sont montés en parallèle.

4. Le système de l'une des revendications 1 à 3, **caractérisé en ce que** chaque réseau de Bragg présente une bande passante supérieure ou égale à 30 nm, de préférence 35 nm.

5. Le système de l'une des revendications 1 à 4, **caractérisé en ce que** la dispersion chromatique cumulée dans chaque réseau de Bragg est inférieure ou égale en valeur absolue à 250 ps/nm.

6. Le système de l'une des revendications précédentes, **caractérisé en ce que** chaque réseau de Bragg compense, pour la longueur d'onde centrale de sa plage d'utilisation, moins des deux tiers de la dispersion chromatique de la fibre de transmission, et de préférence, moins d'un tiers de la dispersion chromatique de la fibre de transmission.

7. Le système de l'une des revendications précédentes, **caractérisé en ce que** le réseau de Bragg compense, pour la longueur d'onde centrale de sa plage d'utilisation, au moins la moitié de la pente de dispersion chromatique de la fibre de transmission.

8. Le système de l'une des revendications précédentes, **caractérisé en ce que** le réseau de Bragg présente, pour la longueur d'onde centrale de sa plage d'utilisation, un rapport entre la dispersion chromatique et la pente de dispersion chromatique supérieur en valeur absolue à 15 nm, de préférence à 20 nm.

9. Le système de l'une des revendications précédentes , **caractérisé en ce que** la fibre de compensation de dispersion présente une dispersion chromatique de signe opposé à la fibre de transmission pour une longueur d'onde d'utilisation et de préférence supérieure ou égale en valeur absolue à la dispersion de la fibre de transmission.

10. Le système de l'une des revendications précédentes, **caractérisé en ce que** la bande d'utilisation s'étend au-dessus de 1250 et en dessous de 1650nm.

11. Le système de l'une des revendications précédentes, **caractérisé en ce que** la bande d'utilisation comprend la bande S entre 1460 et 1490 nm, la bande C entre 1530 et 1565 nm, la bande L entre 1570 et 1610 nm, associées chacune à un réseau de Bragg.

12. Le système de l'une des revendications 1 à 11 **caractérisé en ce que** la dispersion chromatique cumulée pour chaque canal faisant partie de la bande de longueur d'onde d'utilisation est inférieure à 100ps/nm et de préférence à 50ps/nm, voire à 10ps/nm, en moyenne sur 100km de transmission.

13. Un module de compensation de dispersion chromatique pour un système de transmission par fibre optique, comprenant une section de fibre de compensation de dispersion (12) et une pluralité de réseaux de Bragg (15, 16, 17) présentant chacun une bande passante d'une largeur supérieure ou égale à 25 nm, et compensant la dispersion chromatique dans des bandes distinctes de longueurs d'onde.

14. Le module de la revendication 13, **caractérisé en ce que** lesdits réseaux de Bragg sont montés en série.

15. Le module de la revendication 13, **caractérisé en ce que** lesdits réseaux de Bragg sont montés en parallèle.

16. Le module de l'une des revendications 13 à 15, **caractérisé en ce que** la dispersion chromatique cumulée dans chaque réseau de Bragg est inférieure ou égale en valeur absolue à 250 ps/nm.

17. Le module de l'une des revendications 13 à 16, **caractérisé en ce que** chaque réseau de Bragg présente une bande passante supérieure ou égale à 30 nm, de préférence 35 nm.

18. Le module de l'une des revendications 13 à 17, **caractérisé en ce que**, pour une longueur d'onde centrale de sa plage d'utilisation, la dispersion chromatique cumulée dans chaque réseau de Bragg est inférieure ou égale à deux fois la dispersion chromatique cumulée dans la fibre de compensation de dispersion (12), et de préférence, inférieure à la moitié de celle-ci.

19. Le module de l'une des revendications 13 à 18, **caractérisé en ce que**, pour la longueur centrale de la plage d'utilisation de chaque réseau de Bragg, la pente de dispersion chromatique cumulée dans le réseau de Bragg est négative et inférieure ou égale à la pente de dispersion chromatique cumulée dans la fibre de compensation de dispersion (12).

20. Le module de l'une des revendications 13 à 19, **caractérisé en ce que** chaque réseau de Bragg présente, pour la longueur d'onde centrale de sa plage d'utilisation, un rapport entre la dispersion chromatique et la pente supérieur en valeur absolue à 15 nm, de préférence à 20 nm.

21. Le module de l'une des revendications 13 à 20, **caractérisé en ce que** la bande d'utilisation s'étend au-dessus de 1250 et en dessous de 1650nm.

22. Le module de l'une des revendications 13 à 21, **caractérisé en ce que** la bande d'utilisation comprend la bande S entre 1460 et 1490 nm, la bande C entre 1530 et 1565 nm et la bande L entre 1570 et 1610 nm, associées chacune à un réseau de Bragg.

23. Un module de compensation de dispersion chromatique pour un système de transmission par fibre optique, comprenant une pluralité de réseaux de Bragg (14, 15, 16, 17) présentant chacun une bande passante d'une largeur supérieure ou égale à 25 nm, et compensant la dispersion chromatique dans des bandes distinctes de longueurs d'onde.

24. Le module de la revendication 23, **caractérisé en ce que** lesdits réseaux de Bragg sont montés en série.

25. Le module de la revendication 23, **caractérisé en ce que** lesdits réseaux de Bragg sont montés en parallèle.

## Claims

1. An optical fiber transmission system comprising a transmission fiber section (4ₗ, 4ₙ, 9ₗ, 9ₙ) compensated in chromatic dispersion by a dispersion compensating fiber section (12, 10ₗ, 10ₙ,) and by a plurality of Bragg gratings (15, 16, 17, 20, 22, 24) each having a passband of width greater than or equal to 25 nm, and compensating chromatic dispersion in distinct wavelength bands.

2. The system of claim 1, **characterized in that** said Bragg gratings (20, 22, 24) are connected in series.

3. The system of claim 1, **characterized in that** said Bragg gratings (15, 16, 17) are connected in parallel.

4. The system of any one of claims 1 to 3, **characterised in that** each Bragg grating presents a passband of width greater than or equal to 30 nm, preferably greater than or equal to 35 nm.

5. The system of any one of claims 1 to 4, **characterized in that** the absolute value of the chromatic dispersion accumulated in each Bragg grating is less than or equal to 250 ps/nm.

6. The system of any preceding claim, **characterized in that** each Bragg grating compensates, at the center wavelength of its utilization range, less than two-thirds of the chromatic dispersion of the transmission fiber, and preferably less than one-third of the chromatic dispersion of the transmission fiber.

7. The system of any preceding claim, **characterized in that** the Bragg grating compensates, for the center wavelength of its utilization range, at least half of the chromatic dispersion slope of the transmission fiber.

8. A system of any preceding claim, **characterized in that** the Bragg grating presents, for the center wavelength of its utilization range, a ratio of chromatic dispersion to chromatic dispersion slope having an absolute value greater than 15 nm, preferably greater than 20 nm.

9. A system of any preceding claim, **characterized in that** the dispersion compensating fiber presents chromatic dispersion of sign opposite to the transmission fiber for a utilization wavelength, and of absolute value that is preferably greater than or equal to the absolute value of the dispersion of the transmission fiber.

10. The system of any preceding claim, **characterized in that** the utilisation band extends from above 1250 nm to below 1650 nm.

11. The system of any preceding claim, **characterized in that** the utilization band comprises the S band in the range 1460 nm to 1490 nm, the C band in the range 1530 nm to 1565 nm, and the L band in the range 1570 nm to 1610 nm, each associated with a respective Bragg grating.

12. The system of any one of claims 1 to 11, **characterized in that** the chromatic dispersion accumulated for each channel forming part of the utilization wavelength band is less than 100 ps/nm, and preferably less than 50 ps/nm, or indeed 10 ps/nm, on average for 100 km of transmission.

13. A chromatic dispersion compensation module for an optical fiber transmission system, the module comprising a dispersion compensating fiber section (12) and a plurality of Bragg gratings (15, 16, 17) each presenting a passband of width greater than or equal to 25 nm, and each compensating chromatic dispersion in a distinct wavelength band.

14. The module of claim 13, **characterized in that** said Bragg gratings are connected in series.

15. The module of claim 13, **characterized in that** said Bragg gratings are connected in parallel.

16. The module of any one of claims 13 to 15, **characterized in that** the absolute value of the chromatic dispersion accumulated in each Bragg grating is less than or equal to 250 ps/nm.

17. The module of any one of claims 13 to 16, **characterized in that** each Bragg grating presents a passband of width greater than or equal to 30 nm, preferably greater than or equal to 36 nm.

18. The module of any one of claims 13 to 17, **characterized in that**, for a center wavelength of its utilization range, the chromatic dispersion accumulated in each Bragg grating is less than or equal to twice the chromatic dispersion accumulated in the dispersion compensating fiber (12), and preferably less than half of it.

19. The module of any one of claims 13 to 18, **characterized in that**, for the center wavelength of the utilization range of each Bragg grating, the chromatic dispersion slope accumulated in the Bragg grating is negative and less than or equal to the chromatic dispersion accumulated in the dispersion compensating fiber (12).

20. The module of any one of claims 13 to 19, **characterized in that** each Bragg grating presents, for the center wavelength of its utilization range, a ratio of chromatic dispersion to chromatic dispersion slope having an absolute value greater than 15 nm, and preferably greater than 20 nm.

21. The module of any one of claims 13 to 20, **characterized in that** the utilization band extends from above 1250 nm to below 1650 nm.

22. The module of any one of claims 13 to 21, **characterized in that** the utilization band comprises the S band in the range 1460 nm to 1490 nm, the C band in the range 1530 nm to 1565 nm, and the L band in the range 1570 nm to 1610 nm, each associated with a respective Bragg grating.

23. A chromatic dispersion compensation module for an optical fiber transmission system, the module comprising a plurality of Bragg gratings (14, 15, 16, 17) each presenting a passband of width greater than or equal to 25 nm, and compensating chromatic dispersion in distinct wavelength bands.

24. The module of claim 23, **characterized in that** said Bragg grating are connected in series.

25. The module of claim 23, **characterized in that** said Bragg grating are connected in parallel.

## Patentansprüche

1. Übertragungs system per Optikfaser, das einen Abschnitt Übertragungsfaser (4ₗ, 4ₙ, 9ₗ, 9ₙ) beinhaltet, der hinsichtlich Farbzerstreuung kompensiert wird durch einen Abschnitt Zerstreuungskompensationsfaser (12, 10ₗ, 10ₙ) und eine Vielzahl von Bragg-Bengungsgittern (15, 16, 17, 20, 22, 24), die jeweils einen Durchlassbereich mit einer Breite größer oder gleich 25 nm haben und die Farbzerstreuung in verschiedenen Wellenlängenbändern kompensieren.

2. Das System aus Anspruch 1, **dadurch gekennzeichnet, dass** diese Bragg-Beugungsgitter (20, 22, 24) in Reihe geschaltet sind.

3. Das System aus Anspruch 1, **dadurch gekennzeichnet, dass** diese Bragg-Beugungsgitter (15, 16, 17) parallel geschaltet sind.

4. Das System aus einem der Ansprüche 1 bis 3, **dadurch gekennzeichnet, dass** jedes Bragg-Beugungsgitter einen Durchiassbereich größer oder gleich 30 nm, vorzugsweise 35 nm aufweist.

5. Das System aus einem der Ansprüche 1 bis 4, **dadurch gekennzeichnet, dass** die kumulierte Farhzerstreuung in jedem Bragg-Beugungsgitter in absoluten Werben kleiner oder gleich 250 ps/nm ist.

6. Das System aus einem der vorstehenden Ansprüche, **dadurch gekennzeichnet, dass** jedes Bragg-Beugungsgitter für die zentrale Wellenlänge seines Nutzungsbereichs weniger als zwei Drittel der Farbzerstreuung der Übertragungsfaser abdeckt, und vorzugsweise weniger als ein Drittel der Farbzerstreuung der Übertragungsfaser.

7. Das System aus einem der vorstehenden Ansprüche, **dadurch gekennzeichnet, dass** das Bragg-Beugungsgitter für die zentrale Wellenlänge seines Nutzungsbereichs mindestens die Hälfte der Farbzerstreuungssteilheit der Übertragungsfaser kompensiert.

8. Das System aus einem der vorstehenden Ansprüche, **dadurch gekennzeichnet dass** das Bragg-Bengungsgitter für die zentrale Wellenlänge seines Nutzungsbereichs ein Verhältnis zwischen der Farbzerstreuung und der Farbzerstreuungssteilheit in absoluten Werten größer als 15 nm, vorzugsweise größer als 20 nm aufweist.

9. Das System aus einem der vorstehenden Ansprüche, **dadurch gekennzeichnet, dass** die Zerstreuungskompensationsfaser eine Farbzerstreuung mit entgegen gesetztem Vorzeichen wie die Übertragungsfaser für eine Nutzungswellenlänge aufweist und vorzugsweise in absoluten Werten größer oder gleich der Zerstreuung der Übertragungsfaser.

10. Das System aus einem der vorstehenden Ansprüche, **dadurch gekennzeichnet, dass** das Nutzungsband sich oberhalb von 1250 und unterhalb von 1650 nm erstreckt,

11. Das System gemäß einem der vorstehenden Ansprüche, **dadurch gekennzeichnet, dass** das Nutzungsband das Band S zwischen 1460 und 1490 um, das Band C zwischen 1530 und 1565 um, das Band L zwischen 1570 und 1610 nm enthält, jeweils verknüpft mit einem Bragg-Beugungsgitter.

12. Das System gemäß einem der Ansprüche 1 bis 11, **dadurch gekennzeichnet, dass** die kumulierte Farbzerstreuung für jeden Kanal, der zum Nutzungswellenlängenband gehört, kleiner ist als 100 ps/nm und vorzugsweise unter 50 ps/nm, sogar unter 10 ps/nm, im Schnitt auf 100 km Übertragung.

13. Ein Modul zur Farbzerstreuungskompensation für ein Übertragungssystem per Optikfaser, das einen Abschnitt Zerstreuungskompensationsfaser (12) und eine Vielzahl von Bragg-Beugungsgittern (15, 16, 17) enthält, die jeweils einen Durchlassbereich mit einer Breite größer oder gleich 25 nm haben und die Farbzerstreuung in verschiedenen Wellenlängenbändern kompensieren.

14. Das Modul aus Anspruch 13, **dadurch gekennzeichnet, dass** diese Bragg-Beugungsgitter in Reihe geschaltet sind.

15. Das Modul aus Anspruch 13, **dadurch gekennzeichnet, dass** diese Bragg-Beugungsgitter parallel geschaltet sind.

16. Das Modul aus einem der Ansprüche 13 bis 15, **dadurch gekennzeichnet, dass** die kumulierte Farbzerstreuung in jedem Bragg-Beugungsgitter in absoluten Werten kleiner oder gleich 250 ps/nm ist.

17. Das Modul aus einem der Ansprüche 13 bis 16, **dadurch gekennzeichnet, dass** jedes Bragg-Beugungsgitter einen Durchlassbereich größer oder gleich 30 nm, vorzugsweise 35 nm aufweist.

18. Das Modul gemäß einem der Ansprüche 13 bis 17, **dadurch gekennzeichnet, dass** für eine zentrale Wellenlänge seines Nutzungsbereichs die kumulierte Farbzerstreuung in jedem Bragg-Beugungsgitter kleiner oder gleich der zweifachen kumulierten Farbzerstreuung in der Zerstreuungskompensationsfaser (12) ist und vorzugsweise kleiner als die Hälfte selbiger.

19. Das Modul gemäß einem der Ansprüche 13 bis 18, **dadurch gekennzeichnet, dass** für die zentrale Lange des Nuizungsbereichs jedes Bragg-Bengungsgitters die kumulierte Farbzerstreuungssteilheit im Bragg-Beugungsgitter negativ ist und kleiner oder gleich der kumulierten Farbzersireumigssteilheit in der Zerstreuungskompensationsfaser (12).

20. Das Modul aus einem der Ansprüche 13 bis 19, **dadurch gekennzeichnet, dass** jedes Bragg-Beugungsgitter für die zentrale Wellenlänge seines Nutzungsbereichs ein Verhältnis zwischen der Farbzerstreuung und der Steilheit aufweist, das in absoluten Werten größer als 15 nm ist, vorzugsweise größer als 20 nm.

21. Das Modul ans einem der Ansprüche 13 bis 20, **dadurch gekennzeichnet, dass** das Nutzungsband sich oberhalb von 1250 und unterhalb von 1650 nm erstreckt.

22. Das Modul gemäß einem der Ansprüche 13 bis 21, **dadurch gekennzeichnet, dass** das Nutzungsband das Band S zwischen 1460 und 1490 nm, das Band C zwischen 1530 und 1565 nm und das Band L zwischen 1570 und 1610 nm enthält, jeweils verknüpft mit einem Bragg-Beugungsgitter.

23. Ein Modul zu Farbzerstreuungskompensation für ein Übertragungssystem per Optikfaser, das eine Vielzahl von Bragg-Beugungsgittern (14, 15, 16, 17) enthält, die jeweils einen Durchlassbereich mit einer Bretts größer oder gleich 25 nm haben und die Farbzerstreuung in verschiedenen Wellenlängenbändern kompensieren.

24. Das Modul aus Anspruch 23, **dadurch gekennzeichnet, dass** diese Bragg-Beugungsgitter in Reihe geschaltet sind.

25. Das Modul aus Anspruch 23, **dadurch gekennzeichnet, dass** diese Bragg-Beugungsgitter parallel geschaltet sind.
